# EUROPÄISCHE PATENTSCHRIFT

(11) **EP 0 473 075 B1**
(45) Veröffentlichungstag und Bekanntmachung des Hinweises auf die Patenterteilung: **02.02.1994**
(21) Anmeldenummer: 91114124.0
(22) Anmeldetag: 23.08.1991
(51) Int. Cl.: B62D 21/12, B62D 21/20

(54) **Rahmen für einen Transportanhänger**
Frame for a transport trailer
Châssis pour une remorque de transport

(30) Priorität: 31.08.1990 DE 9012387 U
(43) Veröffentlichungstag der Anmeldung: 04.03.1992
(73) Patentinhaber: Waldemar Heinemann GmbH & Co. KG, D-57203 Kreuztal-Krombach (DE)
(72) Erfinder: Heinemann Michael, W-5910 Kreuztal (DE)
(74) Vertreter: Missling, Arne, Dipl.-Ing.

(56) Entgegenhaltungen:
- WO-A-90/04534
- DE-A- 3 418 416
- FR-A- 2 597 056
- GB-A- 2 187 148

## Beschreibung

Die Erfindung betrifft einen Rahmen für einen Transportanhänger zum Transport von Kraftwagen, Booten und dergleichen mittels eines Kraftfahrzeuges, mit zwei seitlichen Längsträgern und mehreren mit den Längsträgern lösbar verbundenen Querträgern, wobei die Längsträger ein doppel-T-trägerähnliches Profil aufweisen, von dessen oberem und unterem Quersteg aber mindestens einer als Kastenprofil ausgeführt ist. Ein derartiger Rahmen ist aus der DE-A-3 418 416 bekannt.

Derartige Rahmen werden im allgemeinen in Schweißkonstruktion hergestellt, so daß der gesamte Rahmen erst danach mit einem Korrosionsschutz versehen werden kann. Eine solche Konstruktion hat mehrere Nachteile. Zunächst erfordert die Schweißverbindung der Quer- und Längsträger einen erheblichen Personal- und Kostenaufwand, zumal wegen der Benutzung des Rahmens im Straßenverkehr hohe Anforderungen an die Ausführung der Schweißarbeiten zu stellen sind. Darüber hinaus ist aber auch die Handhabung des Rahmens bei den nachfolgend aufzubringenden Arbeiten zum Korrosionsschutz umständlich, wobei sich der Rahmen gegebenenfalls sogar wegen der unvermeidlichen Wärmespannungen, z.B. während eines Feuerverzinkens, verziehen kann und dann mühsam gerichtet werden muß.

Es ist auch bereits vorgeschlagen worden, Längs- und Querträger miteinander zu verschrauben. Dazu sind an den Verbindungsstellen der Querträger in den Längsträgern laschenartige Verbindungsstücke vorgesehen, die etwa rechtwinklig vom Längsträger abstehen und an denen die Querträger angeschraubt sind. Die Verbindungsstücke sind an mehreren Stellen formschlüssig am Längsträger befestigt; mit einer Lasche, die unter dem unteren Kastenprofil des Längsträgers an diesem anliegt, wird ein solches Verbindungsstück mit dem Längsträger verschraubt. Der Kopf einer zugehörigen Bolzenschraube befindet sich in einer schwalbenschwanzartigen Führung innerhalb des Kastenprofiles, deren Längsschlitz in bekannter Weise als Führung für den Schraubenbolzen dient. Eine solche Schraubverbindung hat den Vorteil, daß der Transportanhänger nach dem Baukastensystem in verschiedenen Größen und Ausführungen zusammengesetzt werden kann, wobei auch an eine Benutzung der schwalbenschwanzartigen Führung zur lösbaren Befestigung von Zusatzteilen für den Transportanhänger zu denken ist. Die Herstellung eines solchen Längsträgers etwa im Strangpreßverfahren ist aber wegen der unterschiedlichen Wanddicken und der eingeformten Kastenprofile nicht einfach. Es handelt sich hier jedoch um einen internen Stand der Technik.

Die Erfindung hat sich demzufolge die Aufgabe gestellt, einen Längsträger für einen Rahmen der eingangs näher bezeichneten Art wesentlich zu vereinfachen, ohne die Vorteile aufzugeben, die durch lösbar miteinander verbundenen Längs- und Querträgern gegeben sind.

Erfindungsgemäß wird die Aufgabe dadurch gelöst, daß das Kastenprofil auf der dem Längsträger abgewandten, in dessen Längsachse liegenden Seite in einem durchgehenden Längsschlitz geöffnet ist, daß der Längsträger insgesamt aus zwei spiegelbildlich zusammengesetzten, gleichen Trägerschalen besteht, die an ihren den Längssteg des Längsträgers bildenden Flächen fest miteinander verbunden sind, und daß der Längsschlitz des Kastenprofiles durch in das Kastenprofil hineinragende, abgewinkelte, durchgehende, kurze Laschen an beiden Trägerschalen gebildet wird. Besonders vorteilhaft ist es, wenn der Längssteg des Längsträgers ein oder mehrere geschlossene Kastenprofile enthält, die in der Längsachse des Längsträgers liegen und beispielsweise durch Sicken in den Trägerschalen gebildet werden.

Auf diese Weise wird der Längsträger aus sehr einfachen und auch einfach herzustellenden Bauelementen zusammengesetzt, die in beliebiger Weise, beispielsweise durch Abkanten, hergestellt werden. Werkstoffanhäufungen treten nicht auf, vielmehr lassen sich die Trägerschalen in durchweg gleicher Wanddicke halten; mehrachsige Spannungszustände bei Wärmebehandlungen werden so vermieden.

Besonders vorteilhaft ist es, wenn in dem offenen Kastenprofil ein mit seinen Gurten die Laschen überragendes, U-trägerähnliches Klemmstück angeordnet ist, das zur verdrehsicheren Lagerung von bolzenartigen Verbindungselementen, wie Bolzenschrauben oder dergleichen dient, deren Bolzen durch den Längsschlitz des Kastenprofiles nach außen ragen; es ist nun möglich, daß mit Hilfe der Verbindungselemente die Querträger an den Längsträgern befestigt sind. Andererseits ist es auch denkbar, daß mit Hilfe der Verbindungselemente Achsflansche für die Achsschwingen von Kraftfahrzeugen an den Längsträgern befestigt sind. Damit ist eine einwandfreie, drehfeste Lagerung der erforderlichen Verbindungselemente erreichbar, und ferner ist eine flächige Anpressung des für die Anbindung beispielsweise der Querträger verwendeten Kastenprofiles gewährleistet, so daß Verformungen am Profil des Längsträgers weitgehend vermieden werden. Dabei ist die Ausnützung des Kastenprofils für die Anbindung anderer Bauelemente nicht auf dessen am Längsträger untere Ausführung beschränkt; auch das obere Kastenprofil kann in gleicher Weise für derartige Aufgaben herangezogen werden. Damit ist der erfindungsgemäße Rahmen aber weitaus universeller einsetzbar; beispielsweise können zwei Längsträger übereinander angeordnet sein.

Weitere Vorteile der Erfindung und deren nähere Einzelheiten werden nachstehend anhand der Zeichnung an einem Ausführungsbeispiel näher erläutert. Es zeigen
- Fig. 1: einen erfindungsgemäßen Rahmen in schematischer Vorderansicht,
- Fig. 2: desgleichen in Draufsicht,
- Fig. 3: einen Schnitt A-A und
- Fig. 4: einen Schnitt B-B aus Fig. 2, beide ebenfalls weitgehend schematisch, aber vergrößert dargestellt.

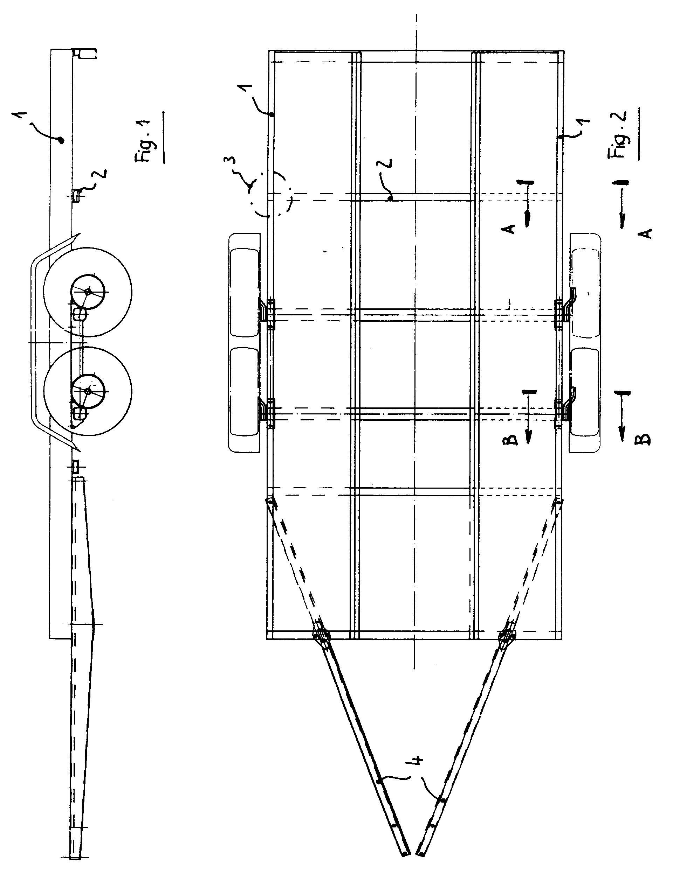

In den Figuren 1 und 2 der Zeichnung ist ein Transportanhänger gezeigt, wie er zum Transport von Kraftfahrzeugen branchenüblich ist. Sein Rahmen besteht aus Längsträgern 1 und Querträgern 2, die an ihren Kreuzungsstellen 3 miteinander lösbar starr verbunden sind. Deichseln 4 können dabei in beliebiger Weise am Rahmen vorgesehen sein. Die übrigen Bauteile des Transportanhängers stehen mit der Erfindung nicht im Zusammenhang, sind zwar teilweise der besseren Übersicht halber eingezeichnet, im übrigen aber ohne Bezugszeichen belassen; ihre Ausführung und Anordnung ist dem Fachmann geläufig.

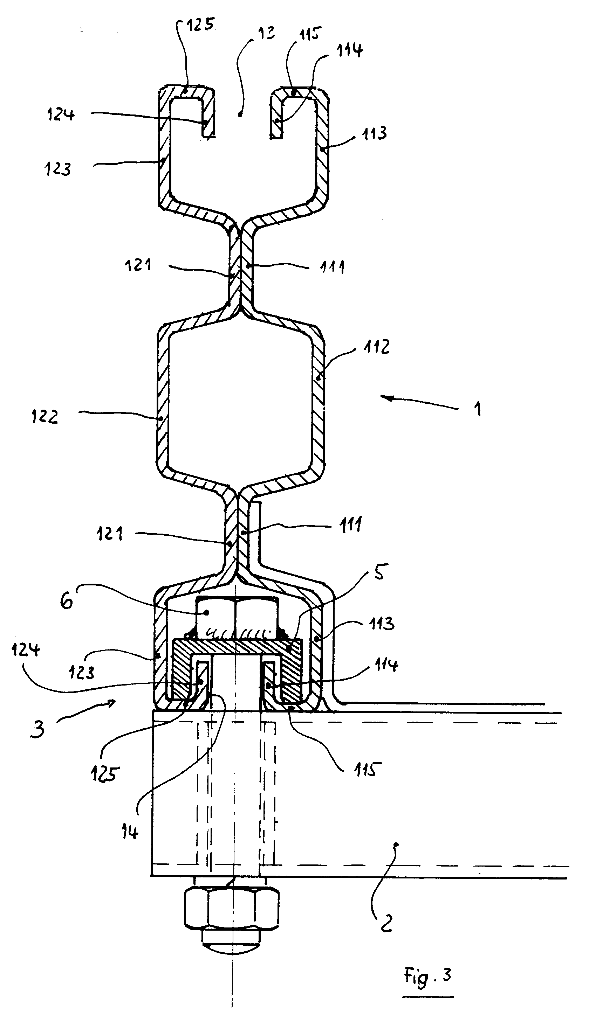

Figur 3 zeigt einen vergrößerten Profilquerschnitt durch einen erfindungsgemäßen Längsträger 1 an einer Kreuzungsstelle 3 mit einem Querträger 2. Der Längsträger 1 ist aus zwei Trägerschalen 11 und 12 zusammengesetzt, die im Bereich der Flächen 111 und 121 miteinander verschweißt sind. Die Flächen 111 und 121 bilden gemeinsam den Längssteg 111; 121 des Längsträgers 1. Zur Verstärkung des Längsträgers 1 bei Durchbiegung um seine senkrechte Achse ist ein geschlossenes Kastenprofil 112; 122 mittig im Längssteg 111; 121 vorgesehen.

Der obere und der untere Gurt des Längsträgers 1 sind je als offenes Kastenprofil 113; 123 ausgeführt, offen nach oben bzw. nach unten durch je einen Längsschlitz 13 bzw. 14, der durch abgewinkelte Laschen 114 bzw. 124 ausgebildet wird, die aus den äußeren Gurtblechen 115 bzw. 125 so abgeleitet sind, daß sie in das Innere der Kastenprofile 113; 123 parallel zur Hauptachse des Längsträgers 1 ragen.

Ein Klemmstück 5 aus einem U-Profil dient als Widerlager für Verbindungselemente 6, die hier in Form von Sechskant-Bolzenschrauben ausgeführt sind. Der zugehörige Schraubenkopf ist am Klemmstück 5 festgeschweißt und damit verdrehsicher, so daß der Längsträger 1 tatsächlich problemlos mit dem Querträger 2 verschraubt werden kann.

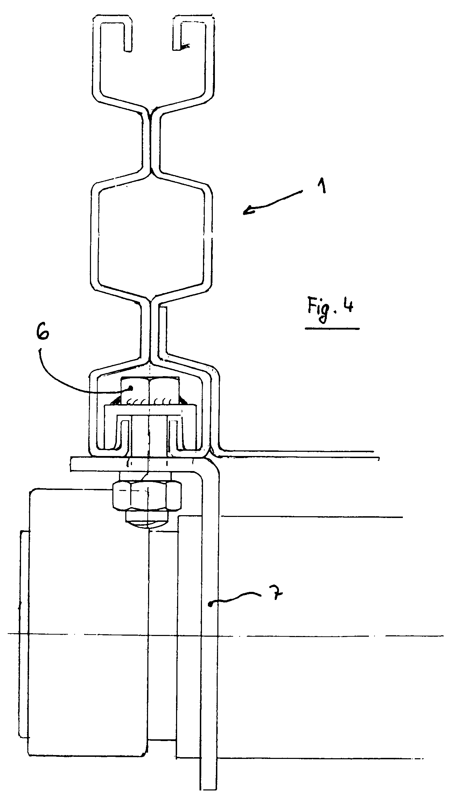

In der Figur 4 schließlich ist anstelle eines Querträgers 2 nunmehr ein Achsflansch 7 mit dem Längsträger 1 verbunden. Das Verbindungselement 6 entspricht der Sechskant-Bolzenschraube der Figur 3, ist aber kürzer.

Die Erfindung ist auf das dargestellte Ausführungsbeispiel keineswegs beschränkt. So ist beispielsweise die geometrische Ausführung des Längsträgers 1 weitgehend variabel; es kann etwa seine Gesamthöhe variieren und aufgrund der Biegefestigkeit nach den Enden hin abnehmen.

## Patentansprüche

1. Rahmen für einen Transportanhänger zum Transport von Kraftwagen, Booten und dergleichen mittels eines Kraftfahrzeuges, mit zwei seitlichen Längsträgern (1) und mehreren mit den Längsträgern (1) lösbar verbundenen Querträgern (2), wobei die Längsträger (1) ein doppel-T-trägerähnliches Profil aufweisen, von dessen oberem und unterem Quersteg aber mindestens einer als Kastenprofil (113, 123) ausgeführt ist, dadurch gekennzeichnet, daß das Kastenprofil (113, 123) auf der dem Längsträger abgewandten, in dessen Längsachse liegenden Seite in einem durchgehenden Längsschlitz (13, 14) geöffnet ist, daß der Längsträger (1) insgesamt aus zwei spiegelbildlich zusammengesetzten, gleichen Trägerschalen (11; 12) besteht, die an ihren den Längssteg (111; 121) des Längsträgers (1) bildenden Flächen (111, 121) fest miteinander verbunden sind, und daß der Längsschlitz (13; 14) des Kastenprofiles (113; 123) durch in das Kastenprofil (113; 123) hineinragende, abgewinkelte, durchgehende, kurze Laschen (114; 124) an beiden Trägerschalen (11, 12) gebildet wird.

2. Rahmen nach Anspruch 1, dadurch gekennzeichnet, daß der Längssteg (111; 121) des Längsträger (1) ein oder mehrere geschlossene Kastenprofile (112; 122) enthält, die in der Längsachse des Längsträgers (1) liegen und beispielsweise durch Sicken in den Trägerschalen (11; 12) gebildet werden.

3. Rahmen nach Anspruch 1, dadurch gekennzeichnet, daß in dem offenen Kastenprofil (113; 123) ein mit seinen Gurten die Laschen (114; 124) überfangendes, U-trägerähnliches Klemmstück (5) angeordnet ist, das zur verdrehsicheren Lagerung von bolzenartigen Verbindungselementen (6) wie Bolzenschrauben oder dergleichen dient, deren Bolzen durch den Längsschlitz (13; 14) des Kastenprofils (113; 132) nach außen ragen.

4. Rahmen nach Anspruch 3, dadurch gekennzeichnet, daß mit Hilfe der Verbindungselemente (6) die Querträger (2) an den Längsträgern (1) befestigt sind.

5. Rahmen nach Anspruch 3, dadurch gekennzeichnet, daß mit Hilfe der Verbindungselemente (6) Achsflansche (7) für die Achsschwingen von Kraftfahrzeugen an den Längsträgern (1) befestigt sind.

## Claims

1. A frame for a transport trailer for transporting automobiles, boats and the like by means of a motor vehicle, comprising two lateral longitudinal supports (1) and a plurality of transverse supports (2) detachably connected to the longitudinal supports (1), wherein the longitudinal supports (1) have an I-beam-type section, but at least either the upper or the lower transverse member thereof being constructed as a box section (113, 123), characterised in that on the side facing away from the longitudinal support and lying on the longitudinal axis thereof, the box section (113, 123) is open in a continuous longitudinal aperture (13, 14), in that the longitudinal support (1) altogether comprises two identical support shells (11, 12) which are put together in mirror-image fashion and which are fixed together by their surfaces (111, 121) forming the longitudinal member (111, 121) of the longitudinal support (1), and in that the longitudinal aperture (13, 14) of the box section (113, 123) is formed by angular, continuous, short strips (114, 124) on both support shells (11, 12), the said strips projecting into the box section (113, 123).

2. A frame according to claim 1, characterised in that the longitudinal member (111, 121) of the longitudinal support (1) contains one or more closed box sections (112, 122) which lie on the longitudinal axis of the longitudinal support (1) and are formed, for example, by corrugations in the support shells (11, 12).

3. A frame according to claim 1, characterised in that a U-beam-type clamping piece (5), the flanges of which cover the strips (114, 124), is arranged in the open box section (113, 123) and serves to mount bolt-type connecting elements (6), such as stud bolts or the like, in a rotationally rigid manner, the bolts of the said connecting elements projecting outwards through the longitudinal aperture (13, 14) of the box section (113, 123).

4. A frame according to claim 3, characterised in that the transverse supports (2) are secured to the longitudinal supports (1) with the aid of the connecting elements (6).

5. A frame according to claim 3, characterised in that axle flanges (7) for the axle beams of motor vehicles are fixed to the longitudinal supports (1) with the aid of the connecting elements (6).

## Revendications

1. Châssis pour une remorque de transport destinée à transporter des véhicules à moteur, des bateaux et similaires à l'aide d'un véhicule automobile, comportant deux longerons latéraux (1) et plusieurs traverses (2) reliées de manière amovible aux longerons, les longerons (1) présentant un profil similaire à celui d'une poutrelle en double "T", dont l'une au moins des ailes transversales supérieure et inférieure est toutefois réalisée comme un profilé en caisson (113, 123),
caractérisé en ce que le profilé en caisson (113, 123), sur son côté tourné vers l'extérieur du longeron et situé sur son axe longitudinal, est ouvert selon une fente longitudinale (13, 14) continue,
en ce que le longeron (1) est, dans son ensemble, constitué de deux coques porteuses (11; 12) identiques, qui sont assemblées de manière symétrique inverse, et qui sont reliées l'une à l'autre de manière fixe le long de leurs surfaces (111, 121) formant l'âme longitudinale (111; 121) du longeron (1),
et en ce que la fente longitudinale (13; 14) du profilé en caisson (113; 123) est formée par de courtes ailes (114; 124) continues, prévues sur les coques porteuses (11, 12), et coudées en faisant saillie vers l'intérieur du profilé en caisson (113; 123).

2. Châssis selon la revendication 1, caractérisé en ce que l'âme longitudinale (111; 121) du longeron (1) comprend un ou plusieurs profilés en caisson (112; 122) fermés, qui sont situés sur l'axe longitudinal du longeron (1) et qui sont, par exemple, formés par des moulures dans les coques porteuses (11; 12).

3. Châssis selon la revendication 1, caractérisé en ce que dans le profilé en caisson ouvert (113, 123) est disposée une pièce de serrage (5) similaire à une poutrelle en "U", qui, avec ses ailes, chevauche les ailes (114; 124), et qui est destinée à assurer l'assise et le blocage en rotation d'éléments d'assemblage (6) du type boulon, tels que par exemple des vis de boulons ou similaires, dont les tiges font saillie vers l'extérieur au travers de la fente longitudinale (13; 14) du profilé en caisson (113; 123).

4. Châssis selon la revendication 3, caractérisé en ce qu'à l'aide des éléments d'assemblage (6), on fixe les traverses (2) sur les longerons (1) .

5. Châssis selon la revendication 3, caractérisé en ce qu'à l'aide des éléments d'assemblage (6), on fixe sur les longerons (1), des flasques d'essieu (7) pour les bras oscillants d'essieu de véhicules automobiles.
